# EUROPÄISCHE PATENTANMELDUNG

(11) **EP 4 576 548 A1**
(43) Veröffentlichungstag der Anmeldung: **25.06.2025**
(21) Anmeldenummer: 23218770.8
(22) Anmeldetag: 20.12.2023
(51) Int. Cl.: H02M 7/483, H02M 5/293, H02M 5/458, H02M 1/12, H02M 1/00, H02P 27/14, F27B 3/08, H05B 7/148

(54) **ENERGIEÜBERTRAGUNG ZWISCHEN DREHSTROMSYSTEMEN ÜBER PARALLEL ANGEORDNETE UMRICHTER**

(71) Anmelder: Primetals Technologies Germany GmbH, 91058 Erlangen (DE)
(72) Erfinder: Alishov, Ramazan, 91058 Erlangen (DE); Dinkel, Daniel, 91058 Erlangen (DE); Marquardt, Rainer, 85521 Riemerling (DE); Winter, Günther, 91077 Neunkirchen/Brand (DE); Zaitkhanov, Aga, 90489 Nürnberg (DE)
(74) Vertreter: Metals@Linz

(57) **Zusammenfassung**

Zum Übertragen elektrischer Energie von einem eingangsseitigen Drehstromsystem (2) mit eingangsseitigen Phasen (4) zu einem ausgangsseitigen Drehstromsystem (3) mit ausgangsseitigen Phasen (5) sind die eingangsseitigen Phasen (4) mit den ausgangsseitigen Phasen (5) über elektrisch parallel zueinander geschaltete Umrichter (6) verbunden, so dass sich über mehrere Umrichter (6) hinweg geschlossene Strommaschen bilden. Die Umrichter (6) sind als Multilevelkonverter ausgebildet, die von einer jeweiligen Steuereinrichtung (7) gesteuert werden. Eine Überwachungseinrichtung (18) überwacht die geschlossenen Strommaschen auf Kreisströme und gibt den Steuereinrichtungen (7) der Umrichter (6) mindestens ein Korrektursignal (K) vor, das von den Steuereinrichtungen (7) der Umrichter (6) bei der Ansteuerung der Umrichter (6) berücksichtigt wird. Das Korrektursignal (K) ist derart bestimmt, dass den Kreisströmen in den geschlossenen Strommaschen entgegengewirkt wird. Alternativ überwachen die Steuereinrichtungen (7) der Umrichter (6) selbst die geschlossenen Strommaschen auf Kreisströme und wirken den Kreisströmen in den geschlossenen Strommaschen durch Ansteuerung der Umrichter (6) entgegen.

## Beschreibung

### Gebiet der Technik

Die vorliegende Erfindung geht aus von einer Energieübertragungseinrichtung zum Übertragen elektrischer Energie von einem eingangsseitigen Drehstromsystem mit eingangsseitigen Phasen zu einem ausgangsseitigen Drehstromsystem mit ausgangsseitigen Phasen.

### Stand der Technik

Derartige Energieübertragungseinrichtungen sind allgemein bekannt. Im einfachsten Fall ist die Energieübertragungseinrichtung als Drehstromtransformator ausgebildet. In anderen Fällen ist die Energieübertragungseinrichtung als Umrichter ausgebildet. Der Umrichter kann als Direktumrichter oder als Zwischenkreisumrichter ausgebildet sein.

Aus der EP 2 329 684 B1 ist bekannt, Elektroden eines Lichtbogenofens über einen Zwischenkreisumrichter und einen Ofentransformator aus einem Mittelspannungsnetz mit elektrischer Energie zu versorgen. Der Zwischenkreisumrichter ist zwischen dem Mittelspannungsnetz und dem Ofentransformator angeordnet. Er ist als Multilevelkonverter ausgebildet.

Multilevelkonverter, deren mögliche Ausgestaltungen und deren Betrieb sind allgemein bekannt. Multilevelkonverter gehen zurück bis mindestens auf das Jahr 2001. Insbesondere sind derartige Umrichter bereits in der DE 101 03 031 A1 beschrieben.

Aus dem Fachaufsatz "Parallelschaltungen von Ofentransformatoren für sehr große Drehstrom-Lichtbogenöfen", Stahl und Technik, Heft 3 (2023), Seiten 74 bis 77, ist bekannt, die Elektroden eines Lichtbogenofens über mehrere parallel geschaltete Ofentransformatoren aus einem Mittelspannungsnetz mit elektrischer Energie zu versorgen.

### Zusammenfassung der Erfindung

Die fortschreitende Elektrifizierung von Prozessen in der Industrie erfordert eine moderne und an den konkreten Prozess angepasste Energieübertragung, meist mittels eines Umrichters.

Im einfachsten Fall wird ein einzelner Umrichter verwendet. Dies stößt jedoch an Grenzen, da beim Betrieb des Umrichters technologische Grenzen von Komponenten des Umrichters eingehalten werden müssen. Die maximale von dem Umrichter schaltbare Spannung und der maximale über den Umrichter fließende Strom und damit auch die maximal übertragbare Leistung, die sich im Wesentlichen als Produkt von Spannung und Strom ergibt, sind daher begrenzt.

Der Trend bei industriellen Anlagen geht hin zu größeren Anlagen, die demzufolge auch mehr elektrische Leistung benötigen. Hierbei ist mehr und mehr der Umrichter die begrenzende Komponente.

Bei der Vorgehensweise des Fachaufsatzes sind mehrere Ofentransformatoren vorhanden, die primärseitig parallel mit dem Mittelspannungsnetz verbunden sind und sekundärseitig parallel an die Elektroden des Lichtbogenofens angeschaltet sind, so dass die von den Ofentransformatoren gelieferten Ströme sich an den Elektroden addieren. Diese Vorgehensweise, nämlich das Vorsehen jeweils eines eigenen Transformators in den Zweigen einer Parallelschaltung - ist vom Ansatz her eine Möglichkeit, mehr Leistung zu übertragen. Durch die Ofentransformatoren wird bei geeigneter Auslegung (insbesondere gleicher Auslegung) vermieden, dass sich geschlossene Strommaschen bilden, in denen Kreisströme fließen können.

Transformatoren sind kostenintensiv. Weiterhin benötigen sie oftmals viel Bauraum. Die Vorgehensweise des Fachaufsatzes nimmt daher beträchtliche Nachteile in Kauf.

Die Aufgabe der vorliegenden Erfindung besteht darin, Möglichkeiten zu schaffen, mittels derer auf einfache und kostengünstige Art und Weise die durch die Auslegung des Umrichters bestehende Grenze der übertragbaren Leistung hin zu größeren Leistungen verschoben werden kann.

Die Aufgabe wird durch eine Energieübertragungseinrichtung mit den Merkmalen des Anspruchs 1 gelöst. Vorteilhafte Ausgestaltungen der erfindungsgemäßen Energieübertragungseinrichtung sind Gegenstand der abhängigen Ansprüche 2 bis 9.

Erfindungsgemäß wird eine Energieübertragungseinrichtung der eingangs genannten Art dadurch ausgestaltet,
- dass die eingangsseitigen Phasen mit den ausgangsseitigen Phasen über elektrisch parallel zueinander geschaltete Umrichter verbunden sind, so dass sich über mehrere Umrichter hinweg geschlossene Strommaschen bilden,
- dass die Umrichter als Multilevelkonverter ausgebildet sind, die von einer jeweiligen Steuereinrichtung gesteuert werden,
- dass die Energieübertragungseinrichtung eine Überwachungseinrichtung aufweist, welche die geschlossenen Strommaschen auf Kreisströme überwacht und den Steuereinrichtungen der Umrichter mindestens ein Korrektursignal vorgibt, das von den Steuereinrichtungen der Umrichter bei der Ansteuerung der Umrichter berücksichtigt wird, wobei das Korrektursignal derart bestimmt ist, dass den Kreisströmen in den geschlossenen Strommaschen entgegengewirkt wird, oder die Steuereinrichtungen der Umrichter die geschlossenen Strommaschen auf Kreisströme überwachen und den Kreisströmen in den geschlossenen Strommaschen durch Ansteuerung der Umrichter entgegenwirken.

In manchen Fällen erfolgt der Energiefluss stets von der Eingangsseite zur Ausgangsseite. In diesem Fall wird durch die Wortwahl "eingangsseitig" bzw. "ausgangsseitig" zugleich auch die Richtung des Energieflusses charakterisiert. In anderen Fällen kann der Energiefluss in beide Richtungen erfolgen. In diesem Fall dient die Wortwahl "eingangsseitig" bzw. "ausgangsseitig" nur der sprachlichen Unterscheidung der entsprechenden Elemente auf der einen bzw. der anderen Seite der Umrichter (beispielsweise der Phasen, der fließenden Ströme und dergleichen mehr).

Im Rahmen der erfindungsgemäßen Energieübertragungseinrichtung wird somit zwar die Bildung geschlossener Strommaschen in Kauf genommen. Durch die Überwachungseinrichtung oder die Steuereinrichtungen der Umrichter selbst werden jedoch die Kreisströme unterdrückt oder zumindest auf kleine, ohne weiteres hinnehmbare Werte reduziert. Für einen sehr geringen "Preis", nämlich eine entsprechende Korrektur der Steuerung der Umrichter, können somit die kostspieligen und voluminösen Transformatoren entfallen.

Im Minimalfall sind nur zwei parallel zueinander geschaltete Umrichter vorhanden. Es können aber auch mehr als zwei Umrichter zueinander parallel geschaltet sein.

In einer ersten Ausgestaltung der Energieübertragungseinrichtung ist vorgesehen,
- dass die Umrichter jeweils einen als Multilevelkonverter ausgebildeten eingangsseitigen Umrichter und einen als Multilevelkonverter ausgebildeten ausgangsseitigen Umrichter aufweisen,
- dass die eingangsseitigen Umrichter mit den eingangsseitigen Phasen des eingangsseitigen Drehstromsystems verbunden sind und an jeweiligen Ausgängen ein erstes und ein zweites Gleichspannungspotenzial bereitstellen,
- dass die ausgangsseitigen Umrichter mit den Ausgängen für das das erste und das zweite Gleichspannungspotenzial des jeweils korrespondierenden eingangsseitigen Umrichters und mit den ausgangsseitigen Phasen des ausgangsseitigen Drehstromsystems verbunden sind und
- dass die Ausgänge mit dem ersten Gleichspannungspotenzial miteinander verbunden sind und die Ausgänge mit dem zweiten Gleichspannungspotenzial miteinander verbunden sind,

Bei dieser Ausgestaltung umfassen die geschlossenen Strommaschen eingangsseitige und ausgangsseitige Strommaschen. Die eingangsseitigen Strommaschen werden zwischen Armen der eingangsseitigen Umrichter gebildet, welche mit der gleichen eingangsseitigen Phase des eingangsseitigen Drehstromsystems verbunden sind. Die ausgangsseitigen Strommaschen werden zwischen Armen der ausgangsseitigen Umrichter gebildet, welche mit der gleichen ausgangsseitigen Phase des ausgangsseitigen Drehstromsystems verbunden sind.

Im Rahmen der ersten Ausgestaltung der Energieübertragungseinrichtung ist es möglich, dass die eingangsseitigen Umrichter pro eingangsseitiger Phase jeweils direkt oder über eine gemeinsame eingangsseitige Drossel mit den eingangsseitigen Phasen verbunden sind oder mit einer gemeinsamen Sekundärwicklung eines eingangsseitigen Transformators verbunden sind, der primärseitig mit den eingangsseitigen Phasen verbunden ist. Es ist also nur eine einfache, gemeinsame Verbindung der eingangsseitigen Umrichter mit den eingangsseitigen Phasen erforderlich. Im einfachsten Fall wird diese Verbindung durch Drosseln bewirkt, so dass sogar eine galvanische Anbindung an das eingangsseitige Drehstromsystem gegeben ist.

In analoger Weise ist es möglich, dass die ausgangsseitigen Umrichter pro ausgangsseitiger Phase jeweils direkt oder über eine gemeinsame ausgangsseitige Drossel mit den ausgangsseitigen Phasen verbunden sind. Diese Ausgestaltung ist besonders einfach und kostengünstig.

Ebenso ist es in analoger Weise möglich, dass die ausgangsseitigen Umrichter pro ausgangsseitiger Phase mit einer jeweiligen Primärwicklung eines jeweiligen ausgangsseitigen Transformators oder mit einer gemeinsamen Primärwicklung eines ausgangsseitigen Transformators verbunden sind, der sekundärseitig mit den ausgangsseitigen Phasen verbunden ist. Diese Ausgestaltung ist insbesondere dann von Vorteil, wenn die ausgangsseitigen Transformatoren bzw. der ausgangsseitige Transformator aus anderen Gründen sowieso benötigt werden bzw. wird.

Beispielsweise kann die erfindungsgemäße Energieübertragungseinrichtung der ersten Ausgestaltung zur Speisung eines Lichtbogenofens verwendet werden. In diesem Fall können die ausgangsseitigen Transformatoren als Ofentransformatoren ausgebildet sein und Sekundärwicklungen der ausgangsseitigen Transformatoren parallel mit Elektroden eines Lichtbogenofens verbunden sein bzw. kann der ausgangsseitige Transformator als Ofentransformator ausgebildet sein und können Sekundärwicklungen des ausgangsseitigen Transformators mit den Elektroden des Lichtbogenofens verbunden sein. Der Lichtbogenofen kann ein Lichtbogenofen (EAF) im engeren Sinne sein. Es kann sich aber auch um einen Submerged Arc Furnace (SAF), einen SMELTER oder einen andersartigen Lichtbogenofen handeln. Das einzuschmelzende bzw. geschmolzene Metall kann beispielsweise Stahl oder Aluminium sein. Auch andere Metalle sind möglich.

In einer zweiten Ausgestaltung der Energieübertragungseinrichtung ist vorgesehen,
- dass die Umrichter pro eingangsseitiger Phase jeweils direkt oder über eine gemeinsame eingangsseitige Drossel mit den eingangsseitigen Phasen des eingangsseitigen Drehstromsystems verbunden sind und
- dass die Umrichter zumindest pro ausgangsseitiger Phase jeweils direkt oder über eine gemeinsame ausgangsseitige Drossel mit den ausgangsseitigen Phasen des ausgangsseitigen Drehstromsystems verbunden sind.

Bei dieser Ausgestaltung werden die geschlossenen Strommaschen zwischen Armen der Umrichter gebildet, welche die gleiche eingangsseitige Phase des eingangsseitigen Drehstromsystems mit der gleichen ausgangsseitigen Phase des ausgangsseitigen Drehstromsystems verbinden.

Es ist theoretisch denkbar, dass die Umrichter als Direktumrichter ausgebildet sind. Vorzugsweise sind die Umrichter jedoch derart ausgestaltet,
- dass die Umrichter jeweils einen als Multilevelkonverter ausgebildeten eingangsseitigen Umrichter und einen als Multilevelkonverter ausgebildeten ausgangsseitigen Umrichter aufweisen,
- dass die eingangsseitigen Umrichter mit den eingangsseitigen Phasen des eingangsseitigen Drehstromsystems verbunden sind und an jeweiligen Ausgängen ein erstes und ein zweites Gleichspannungspotenzial bereitstellen,
- dass die ausgangsseitigen Umrichter mit den Ausgängen für das erste und das zweite Gleichspannungspotenzial des jeweils korrespondierenden eingangsseitigen Umrichters und mit den ausgangsseitigen Phasen des ausgangsseitigen Drehstromsystems verbunden sind und
- dass die Ausgänge mit den ersten Gleichspannungspotenzialen voneinander getrennt sind und die Ausgänge mit dem zweiten Gleichspannungspotenzialen voneinander getrennt sind.

Auch die erfindungsgemäße Energieübertragungseinrichtung der zweiten Ausgestaltung kann in Verbindung mit einem Lichtbogenofen verwendet werden. In diesem Fall sind an das ausgangsseitige Drehstromsystem Primärwicklungen eines Ofentransformators angeschlossen und sind Sekundärwicklungen des Ofentransformators mit Elektroden eines Lichtbogenofens verbunden. Die ausgangsseitigen Drosseln sind in diesem Fall zwischen den Umrichtern und den Primärwicklungen des Ofentransformators angeordnet.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: eine Energieübertragungseinrichtung,
- FIG 2: einen Arm eines Multilevelkonverters,
- FIG 3: ein Submodul,
- FIG 4: ein weiteres Submodul,
- FIG 5: eine Steuerungsstruktur einer Energieübertragungseinrichtung,
- FIG 6: eine weitere Energieübertragungseinrichtung und
- FIG 7: eine Ausgestaltung der Energieübertragungseinrichtung von FIG 6.

### Beschreibung der Ausführungsformen

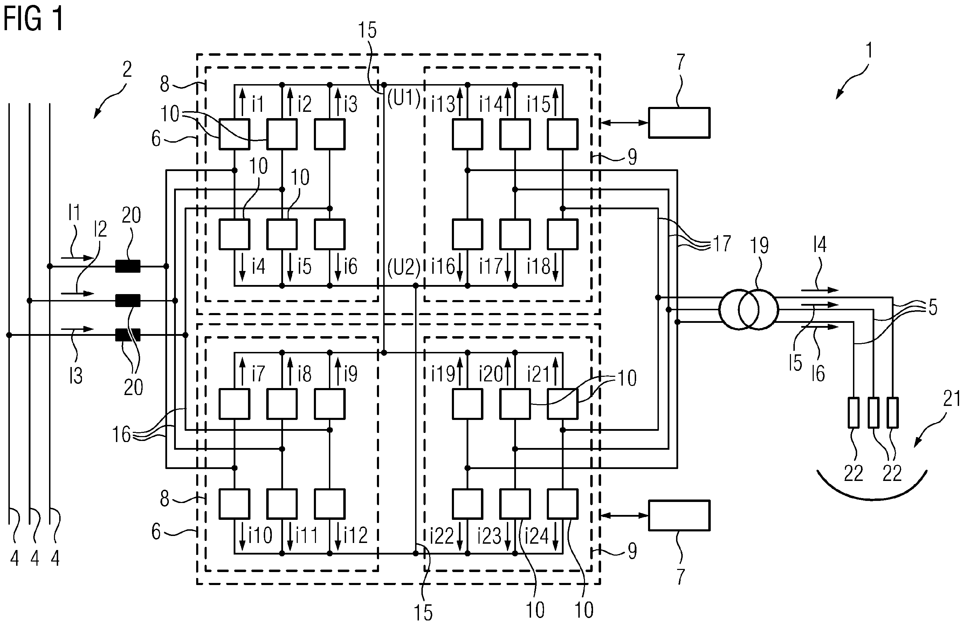

Gemäß FIG 1 dient eine Energieübertragungseinrichtung 1 zum Übertragen elektrischer Energie von einem eingangsseitigen Drehstromsystem 2 zu einem ausgangsseitigen Drehstromsystem 3. Sowohl das eingangsseitige Drehstromsystem 2 als auch das ausgangsseitige Drehstromsystem 3 weisen jeweils mehrere Phasen 4, 5 auf, in der Regel jeweils drei Phasen 4, 5. Die eingangsseitigen Phasen 4 sind mit den ausgangsseitigen Phasen 5 über Umrichter 6 der Energieübertragungseinrichtung 1 verbunden. Die Umrichter 6 sind elektrisch parallel zueinander geschaltet. Das eingangsseitige Drehstromsystem 2 kann beispielsweise ein Mittelspannungsnetz mit einer Nennspannung von 11 kV, 30 kV, 33 kV oder - in Einzelfällen - von 110 kV sein. Das ausgangsseitige Drehstromsystem 3 kann ein Mittelspannungsnetz mit der gleichen Nennspannung wie das eingangsseitige Drehstromsystem 2 oder mit einer anderen Nennspannung sein. Die Nennspannung des ausgangsseitigen Drehstromsystems 3 kann in diesem Fall größer oder kleiner als die Nennspannung des eingangsseitigen Drehstromsystems 2 sein.

Die Umrichter 6 sind als Multilevelkonverter ausgebildet, die von einer jeweiligen Steuereinrichtung 7 des Umrichters 6 gesteuert werden. Konkret in der Ausgestaltung der Energieübertragungseinrichtung 1 von FIG 1 weisen die Umrichter 6 jeweils einen eingangsseitigen Umrichter 8 und einen ausgangsseitigen Umrichter 9 auf, wobei sowohl die eingangsseitigen Umrichter 8 als auch die ausgangsseitigen Umrichter 9 jeweils als Multilevelkonverter ausgebildet sind.

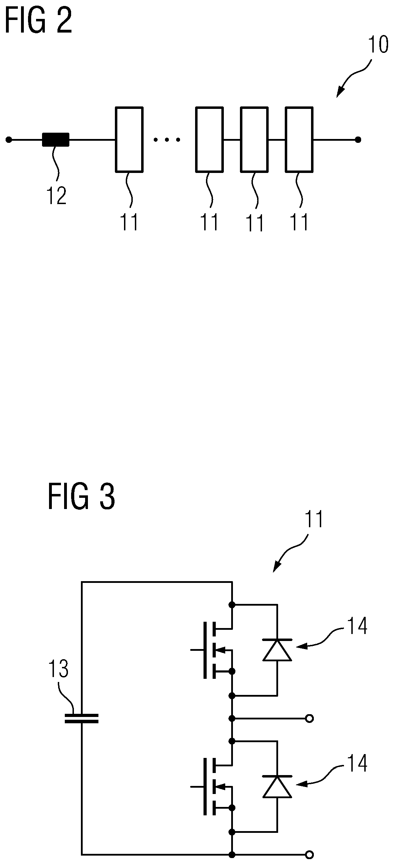

Multilevelkonverter sind Fachleuten allgemein bekannt. Multilevelkonverter weisen gemäß FIG 2 Arme 10 auf, die ihrerseits aus einer mehrstufigen Reihenschaltung von Submodulen 11 bestehen. In der Regel sind hierbei pro Arm 10 acht oder mehr derartiger Submodule 11 vorhanden. Die Submodule 11 sind in der Regel untereinander gleich aufgebaut. In der Regel befindet sich am Ende der Reihenschaltung weiterhin eine Drossel 12. Die Drossel 12 befindet sich meist an dem einer der Phasen 4 oder 5 zugewandten Ende eines derartigen Armes 10.

Die Umrichter 6 können baugleich ausgeführt sein oder unterschiedlich aufgebaut sein. Der Grundaufbau, d.h. die Unterteilung in eingangsseitigen Gleichrichter 8 und ausgangsseitigen Wechselrichter 9, wird im Rahmen der Ausgestaltung gemäß FIG 1 jedoch stets beibehalten.

Im Falle der Aufteilung der Umrichter 6 in einen eingangsseitigen Umrichter 8 und einen ausgangsseitigen Umrichter 9 ist jede eingangsseitige Phase 4 über einen Arm 10 des eingangsseitigen Umrichters 8 mit einem ersten Gleichspannungspotenzial U1 verbunden und über einen weiteren Arm 10 des eingangsseitigen Umrichters 8 einem zweiten Gleichspannungspotenzial U2 verbunden. In analoger Weise ist jede ausgangsseitige Phase 5 über einen Arm 10 des ausgangsseitigen Umrichters 9 mit dem ersten Gleichspannungspotenzial U1 verbunden und über einen weiteren Arm 10 des ausgangsseitigen Umrichters 9 mit dem zweiten Gleichspannungspotenzial U2 verbunden. Von den Armen 10 sind in FIG 1 exemplarisch nur einige wenige mit ihrem Bezugszeichen versehen. Somit sind die eingangsseitigen Umrichter 8 der Umrichter 6 mit den eingangsseitigen Phasen 4 des eingangsseitigen Drehstromsystems 2 verbunden und stellen an Ausgängen das erste und das zweite Gleichspannungspotenzial U1, U2 bereit. Weiterhin sind die ausgangsseitigen Umrichter 9 mit den Ausgängen für das erste und das zweite Gleichspannungspotenzial U1, U2 des jeweils korrespondierenden eingangsseitigen Umrichters 8 und mit den ausgangsseitigen Phasen 5 des ausgangsseitigen Drehstromsystems 3 verbunden.

Gemäß FIG 3 umfasst jedes Submodul 11 einen Speicherkondensator 13 und selbstgeführte Halbleiterschalter 14. Der Begriff "selbstgeführt" bedeutet, dass die Halbleiterschalter 14 durch den Halbleiterschaltern 14 von außen zugeführte Steuersignale sowohl zuschaltbar als auch abschaltbar sind. Beispielsweise können die selbstgeführten Halbleiterschalter 14 als IGBTs ausgebildet sein. Der Begriff "selbstgeführt" steht im Gegensatz zum Begriff "netzgeführt". Dieser Begriff bedeutet, dass der jeweilige Halbleiterschalter zwar gezielt zugeschaltet werden kann, jedoch nicht durch ein externes Steuersignal abgeschaltet werden kann. Ein Beispiel für einen netzgeführten Halbleiterschalter ist ein "normaler" Thyristor.

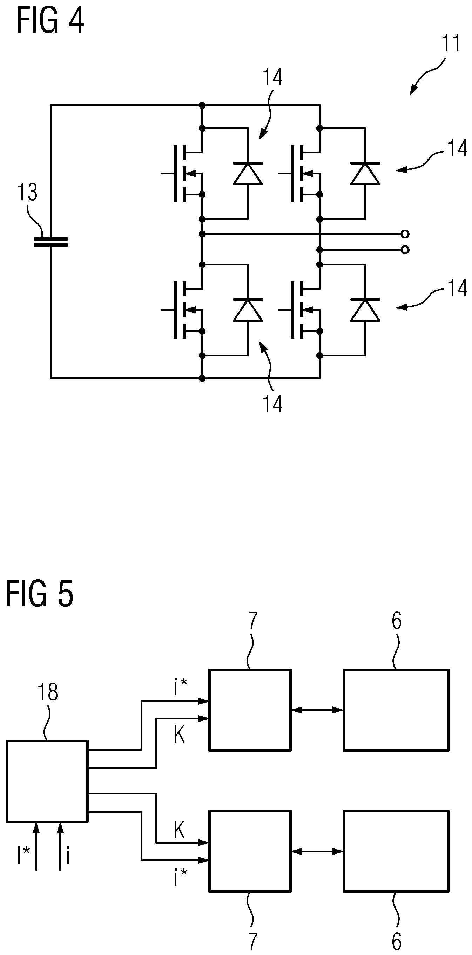

Gemäß FIG 3 weisen die Submodule 11 jeweils einen einzigen Speicherkondensator 13 und genau zwei Halbleiterschalter 14 auf. Diese Konfiguration ist die Minimalkonfiguration der Submodule 11. Alternativ könnten die Submodule 11 gemäß der Darstellung von FIG 4 beispielsweise einen Speicherkondensator 13 und vier Halbleiterschalter 14 in Brückenschaltung aufweisen. Auch könnten die Submodule 11 mehrere Speicherkondensatoren 13 aufweisen. In diesem Fall müssen pro individuell schaltbaren Speicherkondensator 13 mindestens zwei Halbleiterschalter 14 vorhanden sein.

Die Halbleiterschalter 14 jedes Submoduls 11 sind unabhängig von den Halbleiterschaltern 14 der anderen Submodule 11 schaltbar. Dies gilt unabhängig davon, ob die anderen Submodule 11 im selben oder in einem anderen Arm des Umrichters 6 angeordnet sind wie das betreffende Submodul 11. Je nach Schaltzustand der Halbleiterschalter 14 des jeweiligen Submoduls 11 ist der Speicherkondensator 13 des jeweiligen Submoduls 11 alternativ überbrückt oder aktiv. Wenn der in FIG 3 obere Halbleiterschalter 14 eines Submoduls 11 geschlossen ist und der andere Halbleiterschalter 14 geöffnet ist, ist der Speicherkondensator 13 des jeweiligen Submoduls 11 aktiv. Wenn umgekehrt der in FIG 3 obere Halbleiterschalter 14 geöffnet ist und der untere Halbleiterschalter 14 geschlossen ist, ist der Speicherkondensator 13 des jeweiligen Submoduls 11 überbrückt. Wenn der Speicherkondensator 13 aktiv ist, trägt die über dem Speicherkondensator 13 abfallende Spannung zur resultierenden Spannung des jeweiligen Armes 10 bei. Ein in dem jeweiligen Arm 10 fließender Strom bewirkt - je nach Richtung des in dem Arm 10 fließenden Stromes und je nach Ladungszustand des Speicherkondensators 13 - ein Laden oder ein Entladen des Speicherkondensators 13. Wenn der Speicherkondensator 13 hingegen überbrückt ist, trägt die über dem Speicherkondensator 13 abfallende Spannung nicht zur resultierenden Spannung des jeweiligen Armes 10 bei. Ein in dem jeweiligen Arm 10 fließender Strom bewirkt weder ein Laden noch ein Entladen des Speicherkondensators 13.

In analoger Weise ist auch der Speicherkondensator 13 des Submoduls 11 von FIG 4 je nach Ansteuerzustand der Halbleiterschalter 14 aktiv oder überbrückt. Im Falle der Ausgestaltung von FIG 4 existiert jedoch ein weiterer Schaltzustand, bei dem die über dem Speicherkondensator 13 abfallende Spannung mit inverser Polung zur resultierenden Spannung des jeweiligen Armes 10 beiträgt. In ähnlicher Weise können auch andere, dem Fachmann bekannte Submodule 11 je nach Ansteuerzustand aktiviert, überbrückt oder invers gepolt sein und gegebenenfalls auch andere Schaltzustände annehmen. Für die Funktionsweise eines Multilevelkonverters ist die genaue Art und Weise der Ausgestaltung der Submodule 11 nicht relevant.

Die entsprechende Ansteuerung der Halbleiterschalter 14 der Submodule 11 erfolgt mittels der Steuereinrichtung 7 des jeweiligen Umrichters 6. Die Art und Weise, wie die Halbleiterschalter 14 der Submodule 11 angesteuert werden, ist Fachleuten bekannt.

Im Falle der Ausgestaltung der Energieübertragungseinrichtung 1 gemäß FIG 1 sind weiterhin die Ausgänge mit dem ersten Gleichspannungspotenzial U1 über eine Verbindungsleitung 15 miteinander verbunden und sind auch die Ausgänge mit dem zweiten Gleichspannungspotenzial U2 über eine Verbindungsleitung 15 miteinander verbunden.

Im Falle der Ausgestaltung der Energieübertragungseinrichtung 1 gemäß FIG 1 bilden sich über mehrere Umrichter 6 hinweg geschlossene Strommaschen. Konkret umfassen die geschlossenen Strommaschen eingangsseitige und ausgangsseitige Strommaschen. Die eingangsseitigen Strommaschen werden zwischen Armen 10 der eingangsseitigen Umrichter 8 gebildet, welche mit der gleichen eingangsseitigen Phase 4 des eingangsseitigen Drehstromsystems 2 verbunden sind. Insbesondere sind das erste Gleichspannungspotenzial U1 des einen Umrichters 6 und das erste Gleichspannungspotenzial U1 des anderen Umrichters 6 ersichtlich zum einen über die Verbindungsleitungen 15 direkt miteinander verbunden und zum anderen über je einen Arm 10 der eingangsseitigen Umrichter 8 der beiden Umrichter 6 und eine der Anschlussleitungen 16 zu den eingangsseitigen Phasen 4 miteinander verbunden. In analoger Weise werden die ausgangsseitigen Strommaschen zwischen Armen 10 der ausgangsseitigen Umrichter 9 gebildet, welche über eine der Anschlussleitungen 17 mit der gleichen ausgangsseitigen Phase 5 des ausgangsseitigen Drehstromsystems 3 verbunden sind. Insbesondere sind das erste Gleichspannungspotenzial U1 des einen Umrichters 6 und das erste Gleichspannungspotenzial U1 des anderen Umrichters 6 ersichtlich zum einen über die Verbindungsleitungen 15 direkt miteinander verbunden und zum anderen über je einen Arm 10 der ausgangsseitigen Umrichter 9 der beiden Umrichter 6 und eine der Anschlussleitungen 17 zu den ausgangsseitigen Phasen 5 miteinander verbunden.

In den geschlossenen Strommaschen können sich Kreisströme ausbilden. Derartige Kreisströme sind in vielen Fällen unerwünscht und sollten vermieden werden. In jedem Fall aber müssen sie, wenn sie auftreten können, geregelt oder zumindest begrenzt werden. Die Energieübertragungseinrichtung 1 weist daher gemäß FIG 5 eine Überwachungseinrichtung 18 auf.

Konkret bei der Ausgestaltung der Energieübertragungseinrichtung 1 von FIG 1 kann die Überwachungseinrichtung 18 beispielsweise dahingehend ausgebildet sein, dass ihr ein Sollwertvektor I* bekannt ist. Der Sollwertvektor I* kann für Gesamtströme 11, I2, I3, welche gemäß FIG 1 über die Energieübertragungseinrichtung 1 insgesamt von dem eingangsseitigen Drehstromsystem 2 bezogen werden sollen, jeweils eine Komponente I1*, I2*, I3* umfassen. Beispielsweise können die Sollwerte I1*, I2*, I3* der Überwachungseinrichtung 18 vorgegeben werden. Genau genommen müssen der Überwachungseinrichtung 18 nur zwei der drei Sollwerte I1*, I2*, I3* bekannt sein, da die Summe der Sollwerte I1*, I2*, I3* stets den Wert 0 ergeben muss.

Ein Sollwert I1*, I2*, I3* größer als 0 bedeutet, dass ein (resultierender) Strom I1, I2, I3 von der jeweiligen Phase 4 zu den eingangsseitigen Umrichtern 8 fließt. Umgekehrt bedeutet ein Sollwert I1*, I2*, I3* kleiner als 0, dass ein (resultierender) Strom 11, I2, I3 von den eingangsseitigen Umrichtern 8 zur jeweiligen Phase 4 fließt.

Die Überwachungseinrichtung 18 ermittelt anhand des Sollwertvektors I* einen Sollwertvektor i*. Der Sollwertvektor i* kann für Teilströme i1 bis i12, welche gemäß FIG 1 über die Arme 10 der eingangsseitigen Umrichter 8 fließen, jeweils eine Komponente i1* bis i12* umfassen.

Wenn beispielsweise der Sollwert I1* größer als 0 ist, können die Sollwerte i1*, i4*, i7* und i10* derart bestimmt, dass ihre Summe gleich dem Sollwert I1* ist. Für die von dem Sollwert I2* abgeleiteten Sollwerte i2*, i5*, i8* und i11* und die von dem Sollwert I3* abgeleiteten Sollwerte i3*, i6*, i9* und i12* gelten analoge Ausführungen. In analoger Weise kann der Sollwertvektor I* Sollwerte I4*, I5*, I6* für Gesamtströme I4, I5, I6 umfassen, welche gemäß FIG 1 über die Energieübertragungseinrichtung 1 insgesamt an das ausgangsseitige Drehstromsystem 3 abgegeben werden sollen. Der Sollwertvektor i* kann daher für Teilströme i13 bis i24, welche gemäß FIG 1 über die Arme 10 der ausgangsseitigen Umrichter 9 fließen, ebenfalls jeweils eine Komponente i13* bis i24* umfassen. Die Vorgehensweise ist völlig analog zur Ermittlung der Teilströme i1 bis i12 für die Arme 10 der eingangsseitigen Umrichter 8. Für den in FIG 1 dargestellten Fall, bei dem die ausgangsseitigen Umrichter 9 mit dem ausgangsseitigen Drehstromsystem 3 über einen Transformator 19 verbunden sind, muss, sofern die Sollwerte I4*, I5*, I6* und die Gesamtströme I4, I5, I6 sekundärseitig des Transformators 19 definiert sind, noch das Übersetzungsverhältnis des Transformators 19 mit berücksichtigt werden.

Wäre im Falle der Ausgestaltung der Energieübertragungseinrichtung 1 gemäß FIG 1 nur der in FIG 1 oben dargestellte Umrichter 6 vorhanden, wäre es ausreichend, der Steuereinrichtung 7 dieses Umrichters 6 als Sollwerte nur fünf der Sollwerte i1* bis i6* und fünf der Sollwerte i13* bis i18* vorzugeben. Die beiden verbleibenden Sollwerte wären in diesem Fall dadurch bestimmt, dass die Summe der jeweiligen Sechsergruppe 0 ergeben muss. Wäre im Falle der Ausgestaltung der Energieübertragungseinrichtung 1 gemäß FIG 1 umgekehrt nur der in FIG 1 unten dargestellte Umrichter 6 vorhanden, wäre es ausreichend, der Steuereinrichtung 7 dieses Umrichters 6 als Sollwerte nur fünf der Sollwerte i7* bis i12* und fünf der Sollwerte i19* bis i24* vorzugeben. Auch hier wären die beiden verbleibenden Sollwerte dadurch bestimmt, dass die Summe der jeweiligen Sechsergruppe 0 ergeben muss. Aufgrund des Umstands, dass vorliegend beide Umrichter 6 vorhanden sind, ist dies jedoch nicht mehr eindeutig.

Um unkontrollierte Kreisströme in den vorstehend erläuterten Strommaschen zu vermeiden, ist es möglich, dass die Überwachungseinrichtung 18 den Steuereinrichtungen 7 alle oder zumindest einige der verbleibenden Sollwerte i1* bis i24* zuführt, also beispielsweise bezüglich der Sollwerte i1* bis i6* nicht nur fünf, sondern alle sechs Sollwerte i1* bis i6*. Wird diese Ausgestaltung ergriffen, so sind die Steuereinrichtungen 7 der Umrichter 6 selbst in der Lage, die geschlossenen Strommaschen auf Kreisströme zu überwachen. Insbesondere können sie für alle ihre Arme 10 den jeweiligen Teilstrom i1 bis i24 erfassen. Sie sind daher in der Lage, den Kreisströmen in den geschlossenen Strommaschen durch Ansteuerung der Umrichter 6 entgegenzuwirken. Die Überwachungseinrichtung 18 ist in diesem Fall nur erforderlich, um den vollständigen Sollwertvektor i* mit einer hinreichenden Anzahl seiner Komponenten i1* bis i24*, insbesondere allen seinen Komponenten i1* bis i24* zu ermitteln und die entsprechenden Komponenten i1* bis i24* der Steuereinrichtung 7 des jeweiligen Umrichters 6 vorzugeben.

Alternativ ist es möglich, dass die Überwachungseinrichtung 18 den Steuereinrichtungen 7 der Umrichter 6 ebenso wie im Stand der Technik nur jeweils fünf der Sollwerte i1* bis i6*, i7* bis i12*, i13* bis i18* und i19* bis i24* vorgibt. In diesem Fall würden sich, wenn keine weiteren Maßnahmen ergriffen werden, die Ströme für die Arme 10, für welche die Sollwerte i1* bis i24* nicht vorgegeben sind, "irgendwie" einstellen. Im Falle von jeweils nur fünf Sollwerten einer jeweiligen Sechsergruppe von Sollwerten i1* bis i6* agiert daher die Überwachungseinrichtung 18 tatsächlich als Überwachungseinrichtung. Insbesondere ist es möglich, dass die Überwachungseinrichtung 18 einen Istwertvektor I entgegennimmt. Der Istwertvektor I umfasst in diesem Fall für zumindest einige der verbleibenden Sollwerte i1* bis i24* die zugehörigen Teilströme, beispielsweise die Teilströme i6 und i24. In diesem Fall implementiert die Überwachungseinrichtung 18 Regelkreise für diese Teilströme. Mittels der Regelkreise generiert die Überwachungseinrichtung 18 in Abhängigkeit von den Regelabweichungen, also den Differenzen zwischen den Sollwerten i6* und i24* einerseits und den jeweils zugehörigen Teilströmen i6 und i24 andererseits, Korrektursignale K. Die Korrektursignale K sind derart bestimmt, dass Kreisströme in den geschlossenen Strommaschen vermieden oder zumindest reduziert werden. Die Überwachungseinrichtung 18 gibt die Korrektursignale K mindestens einer der Steuereinrichtungen 7 der Umrichter 6 vor. Die Steuereinrichtungen 7 der Umrichter 6 berücksichtigen die Korrektursignale K bei der Ansteuerung der Umrichter 6. Soweit erforderlich, können der Überwachungseinrichtung 18 auch weitere Zustandssignale der Umrichter 6 zugeführt werden, beispielsweise Istspannungen der Arme 10.

In beiden Fällen sind die Steuereinrichtungen 7 der Umrichter 6 somit in der Lage, die Arme 10 ihrer jeweiligen eingangsseitigen Umrichter 8 und ihrer jeweiligen ausgangsseitigen Umrichter 9 entsprechend anzusteuern. Konkret kann die jeweilige Steuereinrichtung 7 in dem Fall, dass in einem der Arme 10 des von ihr gesteuerten Umrichters 6 eine Abweichung des tatsächlich in dem jeweiligen Arm 10 fließenden Stromes i1 bis i24 von seinem Sollwert i1* bis i24* auftritt, durch Änderung der Ansteuerung (mindestens) eines Submoduls 11 des jeweiligen Armes 10 korrigierend eingreifen. Somit ist aufgrund der Art und Weise der Bestimmung der Sollwerte i1* bis i12* und die Überwachung der zugehörigen Istwerte i1 bis i24 auf deren Einhaltung gewährleistet, dass in den geschlossenen Strommaschen keine unerwünschten, unkontrollierten Kreisströme entstehen.

Gemäß der Darstellung in FIG 1 sind die eingangsseitigen Umrichter 8 pro eingangsseitiger Phase 4 jeweils über eine gemeinsame eingangsseitige Drossel 20 mit den eingangsseitigen Phasen 4 verbunden. Wie bereits erwähnt, sind gemäß der Darstellung in FIG 1 weiterhin die ausgangsseitigen Umrichter 9 pro ausgangsseitige Phase 5 jeweils über eine gemeinsame Primärwicklung eines ausgangsseitigen Transformators 19 verbunden. Die Sekundärwicklungen des Transformators 19 sind in diesem Fall mit dem ausgangsseitigen Drehstromsystem 3 verbunden.

Das ausgangsseitige Drehstromsystem 3 ist im Falle der Ausgestaltung der Energieübertragungseinrichtung ein gemäß FIG 1 entartet. Denn es weist lediglich einen einzigen Drehstrom-Verbraucher auf. Prinzipiell können an das ausgangsseitige Drehstromsystem 3 jedoch auch mehrere Verbraucher angeschlossen sein. In der konkreten Ausgestaltung der Energieübertragungseinrichtung 1 von FIG 1 ist der Drehstrom-Verbraucher ein Lichtbogenofen 21. Der Transformator ist demzufolge als Ofentransformator ausgebildet, dessen Sekundärwicklungen mit Elektroden 22 des Lichtbogenofens 21 verbunden sind. Alternativ können beispielsweise auch mehrere Transformatoren (auch Ofentransformatoren) vorhanden sein. In diesem Fall sind die ausgangsseitigen Umrichter 9 pro ausgangsseitiger Phase 5 mit einer jeweiligen Primärwicklung eines jeweiligen ausgangsseitigen Transformators verbunden. Bei Ausgestaltung als Ofentransformator sind die Sekundärwicklungen der ausgangsseitigen Transformatoren parallel mit den Elektroden 22 des Lichtbogenofens 21 verbunden.

Es sind auch andere Modifikationen der Grundstruktur von FIG 1 möglich. Beispielsweise könnten bei entsprechender Dimensionierung der Drosseln 12 der Arme 10 die Drosseln 20 entfallen. In diesem Fall wären die eingangsseitigen Umrichter 8 pro eingangsseitiger Phase 4 jeweils direkt mit den eingangsseitigen Phasen 4 verbunden. Ebenso ist es möglich, die Drosseln 20 pro eingangsseitiger Phase 4 durch eine gemeinsame Sekundärwicklung eines eingangsseitigen Transformators (nicht dargestellt) zu ersetzen. In diesem Fall ist der Transformator primärseitig mit den eingangsseitigen Phasen 4 des eingangsseitigen Drehstromsystems 2 verbunden. Es wäre also möglich, analog zur Anbindung der Energieübertragungseinrichtung 1 an das ausgangsseitige Drehstromsystem 3 auch eingangsseitig eine Anbindung über einen Transformator vorzunehmen. Im Falle anderer Drehstrom-Verbraucher ist es weiterhin auch möglich, anstelle des Transformators 19 ausgangsseitig die gleiche Art und Weise der Anbindung wie eingangsseitig vorzunehmen, also über eigenständige Drosseln pro ausgangsseitiger Phase 5 oder durch entsprechende Dimensionierung der Drosseln 12 der Arme 10 der ausgangsseitigen Umrichter 9.

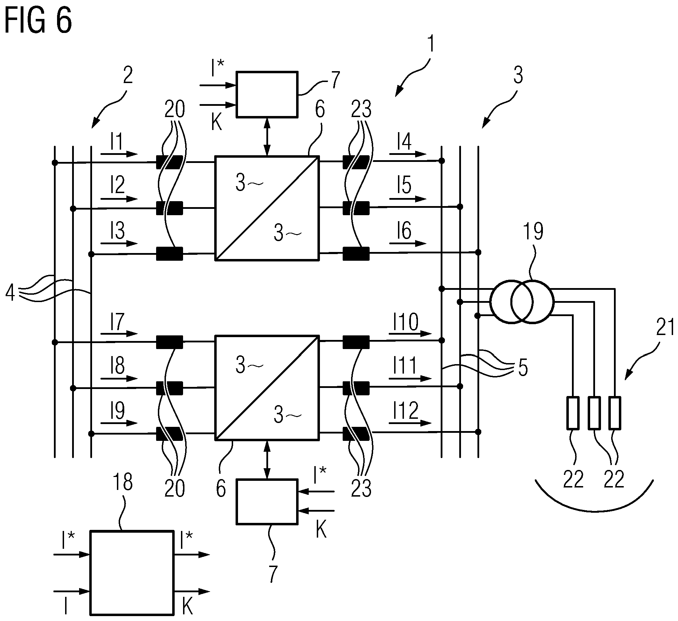

FIG 6 zeigt eine weitere Energieübertragungseinrichtung 1. Auch die Energieübertragungseinrichtung 1 von FIG 6 dient zum Übertragen elektrischer Energie von einem eingangsseitigen Drehstromsystem 2 zu einem ausgangsseitigen Drehstromsystem 3. Die beiden Drehstromsysteme 2, 3 weisen wie zuvor jeweils mehrere Phasen 4, 5 auf, in der Regel jeweils drei Phasen 4, 5. Das eingangsseitige Drehstromsystem 2 kann wieder beispielsweise ein Mittelspannungsnetz mit einer Nennspannung von 11 kV, 30 kV, 33 kV oder - in Einzelfällen - von 110 kV sein. Das ausgangsseitige Drehstromsystem 3 kann ein Mittelspannungsnetz mit der gleichen Nennspannung wie das eingangsseitige Drehstromsystem 2 oder mit einer anderen Nennspannung sein. Die Nennspannung des ausgangsseitigen Drehstromsystems 3 kann in diesem Fall größer oder kleiner als die Nennspannung des eingangsseitigen Drehstromsystems 2 sein.

Die eingangsseitigen Phasen 4 sind mit den ausgangsseitigen Phasen 5 über Umrichter 6 der Energieübertragungseinrichtung 1 verbunden. Die Umrichter 6 sind elektrisch parallel zueinander geschaltet. Die Umrichter 6 sind jedoch (außer über ihre Anbindungen an die beiden Drehstromsysteme 2, 3) elektrisch voneinander getrennt. Die Umrichter 6 sind wie zuvor als Multilevelkonverter ausgebildet, die von einer jeweiligen Steuereinrichtung 7 des Umrichters 6 gesteuert werden.

Im Falle der Ausgestaltung der Energieübertragungseinrichtung 1 gemäß FIG 6 sind die Umrichter 6 pro eingangsseitiger Phase 4 jeweils über eine eigene eingangsseitige Drossel 20 mit den eingangsseitigen Phasen 4 verbunden. Bei entsprechender Dimensionierung der internen Drosseln 12 der Arme 10 der Umrichter 6 könnten die Drosseln 20 jedoch auch entfallen. In diesem Fall wären die Umrichter 6 pro eingangsseitiger Phase 4 jeweils direkt mit den eingangsseitigen Phasen 4 verbunden.

In analoger Weise sind im Falle der Ausgestaltung der Energieübertragungseinrichtung 1 gemäß FIG 6 die Umrichter 6 pro ausgangsseitige Phase 5 jeweils über eine eigene ausgangsseitige Drossel 23 mit den ausgangsseitigen Phasen 5 verbunden. Bei entsprechender Dimensionierung der internen Drosseln 12 der Arme 10 der Umrichter 6 könnten die Drosseln 23 jedoch auch entfallen. In diesem Fall wären die Umrichter 6 pro ausgangsseitiger Phase 5 jeweils direkt mit den ausgangsseitigen Phasen 5 verbunden.

Im Falle der Ausgestaltung der Energieübertragungseinrichtung 1 gemäß FIG 6 bilden sich ebenfalls über mehrere Umrichter hinweg geschlossene Strommaschen. Konkret werden die geschlossenen Strommaschen zwischen Armen 10 der Umrichter 6 gebildet, welche die gleiche eingangsseitige Phase 4 des eingangsseitigen Drehstromsystems 2 mit der gleichen ausgangsseitigen Phase 5 des ausgangsseitigen Drehstromsystems 4 verbinden.

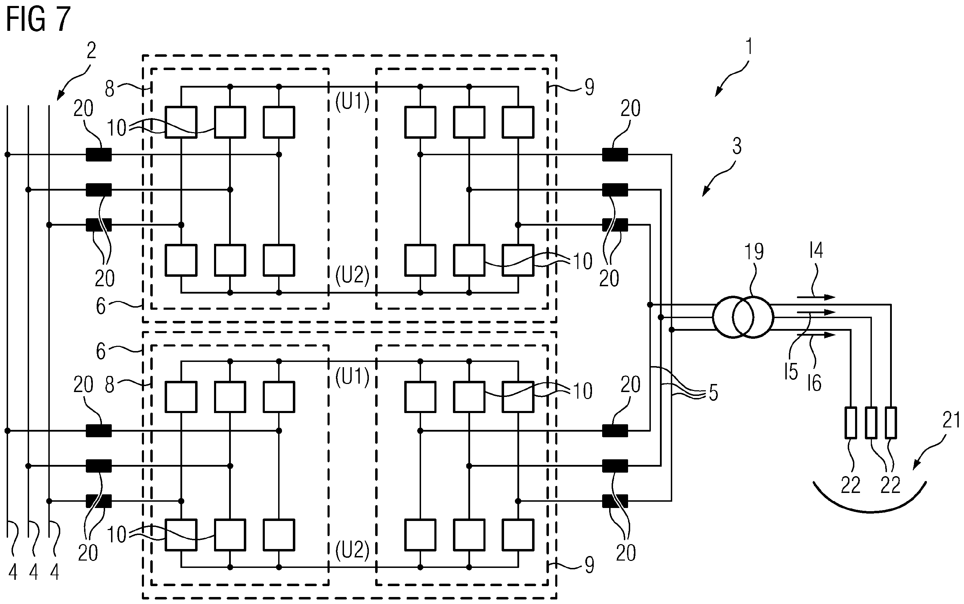

Dieser Sachverhalt wird nacheinander in Verbindung mit den FIG 7 für eine mögliche mögliche Ausgestaltung der Umrichter 6 erläutert.

In der Ausgestaltung der Energieübertragungseinrichtung 1 gemäß FIG 7 weisen die Umrichter 6 jeweils einen eingangsseitigen Umrichter 8 und einen ausgangsseitigen Umrichter 9 auf, wobei sowohl die eingangsseitigen Umrichter 8 als auch die ausgangsseitigen Umrichter 9 jeweils als Multilevelkonverter ausgebildet sind. Die Arme 10 der eingangsseitigen Umrichter 8 und der ausgangsseitigen Umrichter 9 weisen somit jeweils den vorstehend in Verbindung mit den FIG 2 bis 4 erläuterten Aufbau auf.

Die eingangsseitigen Umrichter 8 sind mit den eingangsseitigen Phasen 4 des eingangsseitigen Drehstromsystems 2 verbunden und stellen an jeweiligen Ausgängen ein erstes und ein zweites Gleichspannungspotenzial U1, U2 bereit. Die ausgangsseitigen Umrichter 9 sind mit den Ausgängen für das erste und das zweite Gleichspannungspotenzial U1, U2 des jeweils korrespondierenden eingangsseitigen Umrichters 8 und mit den ausgangsseitigen Phasen 5 des ausgangsseitigen Drehstromsystems 3 verbunden. Insoweit besteht Übereinstimmung mit der Ausgestaltung der Energieübertragungseinrichtung 1 von FIG 1. Im Unterschied zur Ausgestaltung der Energieübertragungseinrichtung 1 von FIG 1 sind die Ausgänge mit den ersten Gleichspannungspotenzialen U1 jedoch voneinander getrennt und sind ebenso auch die Ausgänge mit dem zweiten Gleichspannungspotenzialen U2 voneinander getrennt. Die Verbindungsleitungen 15 der Ausgestaltung der Energieübertragungseinrichtung 1 von FIG 1 sind also nicht vorhanden.

Im Falle der Ausgestaltung der Energieübertragungseinrichtung 1 gemäß FIG 7 ist das erste Gleichspannungspotenzial U1 des einen Umrichters 6 einerseits über einen Arm 10 seines eingangsseitigen Umrichters 8 mit einer der eingangsseitigen Phasen 4 verbunden. Dieselbe eingangsseitige Phase 4 ist über einen der Arme 10 des eingangsseitigen Umrichters 8 des anderen Umrichters 6 mit dem ersten Gleichspannungspotenzial U1 des anderen Umrichters 6 verbunden. Das erste Gleichspannungspotenzial U1 des einen Umrichters 6 ist jedoch andererseits auch über einen Arm 10 seines ausgangsseitigen Umrichters 9 mit einer der ausgangsseitigen Phasen 5 verbunden. Dieselbe ausgangsseitige Phase 5 ist über einen der Arme 10 des ausgangsseitigen Umrichters 9 des anderen Umrichters 6 mit dem ersten Gleichspannungspotenzial U1 des anderen Umrichters 6 verbunden. Diese beiden Verbindungen bzw. Strompfade bilden eine geschlossene Strommasche.

Ebenso wie bei der Ausgestaltung der Energieübertragungseinrichtung 1 von FIG 1 können sich auch bei der Energieübertragungseinrichtung 1 der FIG 6 bzw. 7 in den geschlossenen Strommaschen Kreisströme ausbilden. Derartige Kreisströme sind in vielen Fällen unerwünscht und sollten vermieden werden. In jedem Fall aber müssen sie, wenn sie auftreten können, geregelt oder zumindest begrenzt werden. Die Energieübertragungseinrichtung 1 weist daher eine Überwachungseinrichtung 18 auf.

Konkret bei der Ausgestaltung der Energieübertragungseinrichtung 1 von FIG 6 kann die Überwachungseinrichtung 18 beispielsweise dahingehend ausgebildet sein, dass ihr ein Sollwertvektor I* bekannt ist. Der Sollwertvektor I* kann für Gesamtströme 11, I2, I3, I7, I8, I9, welche gemäß FIG 6 über die Energieübertragungseinrichtung 1 insgesamt von dem eingangsseitigen Drehstromsystem 2 bezogen werden sollen, jeweils eine Komponente I1*, I2*, I3*, I7*, I8*, I9* umfassen. Beispielsweise können die Sollwerte I1*, I2*, I3*, I7*, I8*, I9* der Überwachungseinrichtung 18 vorgegeben werden. Genau genommen müssen der Überwachungseinrichtung 18 nur zwei der drei Sollwerte I1*, I2*, I3* und zwei der drei Sollwerte I7*, I8*, I9* bekannt sein, da die Summe der Sollwerte I1*, I2*, I3* stets den Wert 0 ergeben soll und auch die Summe der Sollwerte I7*, I8*, I9* stets den Wert 0 ergeben soll.

Ein Sollwert I1*, I2*, I3*, I7*, I8*, I9* größer als 0 bedeutet, dass ein (resultierender) Strom von der jeweiligen Phase 4 zu dem entsprechenden Umrichter 6 fließt. Umgekehrt bedeutet ein Sollwert I1*, I2*, I3*, I7*, I8*, I9* kleiner als 0, dass ein (resultierender) Strom von dem entsprechenden Umrichter 6 zur jeweiligen Phase 4 fließt.

Wäre im Falle der Ausgestaltung der Energieübertragungseinrichtung 1 gemäß FIG 6 nur der in FIG 6 oben dargestellte Umrichter 6 vorhanden, wäre es ausreichend, der Steuereinrichtung 7 dieses Umrichters 6 als Sollwerte nur zwei der Sollwerte I1* bis I3* und zwei der Sollwerte I4* bis I6* vorzugeben. Die jeweils verbleibenden Sollwerte wären in diesem Fall dadurch bestimmt, dass die Summe der jeweiligen Dreiergruppe 0 ergeben muss. Wäre im Falle der Ausgestaltung der Energieübertragungseinrichtung 1 gemäß FIG 6 umgekehrt nur der in FIG 6 unten dargestellte Umrichter 6 vorhanden, wäre es ausreichend, der Steuereinrichtung 7 dieses Umrichters 6 als Sollwerte nur zwei der Sollwerte I7* bis I9* und zwei der Sollwerte I10* bis I12* vorzugeben. Auch hier wären die jeweils verbleibenden Sollwerte dadurch bestimmt, dass die Summe der jeweiligen Dreiergruppe 0 ergeben muss. Aufgrund des Umstands, dass vorliegend beide Umrichter 6 vorhanden sind, ist eine derartige Vorgabe aufgrund der vorstehend erläuterten Strommaschen jedoch nicht mehr eindeutig.

Um unerwünschte und unkontrollierte Kreisströme in den vorstehend erläuterten Strommaschen zu vermeiden, ist es möglich, dass die Überwachungseinrichtung 18 mindestens einer der Steuereinrichtungen 7 alle drei Sollwerte mindestens einer der Dreiergruppen zuführt, also beispielsweise die Sollwerte I1*, I2* und I3*. Die gleiche Vorgehensweise kann auch für die anderen Steuereinrichtungen 7 und/oder für die anderen Dreiergruppen ergriffen werden. Dies ist aber nicht mehr zwingend erforderlich.

Wird diese Ausgestaltung ergriffen, so sind die Steuereinrichtungen 7 der Umrichter 6 selbst in der Lage, ihre internen fließenden Ströme so einzustellen, dass in den geschlossenen Strommaschen keine unerwünschten Kreisströme mehr fließen. Insbesondere können die Steuereinrichtungen 7 für alle ihre Arme 10 den jeweiligen Teilstrom erfassen. Sie sind daher in der Lage, den Kreisströmen in den geschlossenen Strommaschen durch Ansteuerung der Umrichter 6 entgegenzuwirken. Die Überwachungseinrichtung 18 ist in diesem Fall nur erforderlich, um den Steuereinrichtungen 7, soweit für sie relevant und erforderlich, den vollständigen Sollwertvektor I* mit allen seinen Komponenten vorzugeben.

Alternativ ist es möglich, dass die Überwachungseinrichtung 18 den Steuereinrichtungen 7 der Umrichter 6 ebenso wie im Stand der Technik nur zwei der Sollwerte I1* bis I3*, zwei der Sollwerte I4* bis I6*, zwei der Sollwerte I7* bis I9* und zwei der Sollwerte I10* bis I12* vorgibt. In diesem Fall würden sich, wenn keine weiteren Maßnahmen ergriffen werden, die Ströme für die Arme 10, für welche die Sollwerte I1* bis I12* nicht vorgegeben sind, "irgendwie" einstellen. Im Falle von jeweils nur zwei Sollwerten einer jeweiligen Dreiergruppe von Sollwerten agiert daher die Überwachungseinrichtung 18 tatsächlich als Überwachungseinrichtung. Insbesondere ist es möglich, dass die Überwachungseinrichtung 18 einen Istwertvektor I entgegennimmt. Der Istwertvektor I umfasst in diesem Fall für zumindest einige der verbleibenden Sollwerte I1* bis I12* die zugehörigen Teilströme. Wenn beispielsweise den Steuereinrichtungen 7 die Sollwerte I1* und I2*, I4* und I5*, I7* und I8* sowie I10* und I11* vorgegeben werden, so kann die Überwachungseinrichtung 18 beispielsweise einen oder zwei der Ströme I3, I6, I9 und I12 überwachen. In diesem Fall implementiert die Überwachungseinrichtung 18 für mindestens einen der Ströme I3, I6, I9 und I12 einen Regelkreis. Mittels des Regelkreises generiert die Überwachungseinrichtung 18 in Abhängigkeit von der Regelabweichung, also der Differenz zwischen dem entsprechenden Sollwert I3*, I6*, I9* oder I12* einerseits und dem jeweils zugehörigen Strom I3, I6, I9 oder I12 andererseits, Korrektursignale K. Die Korrektursignale K sind derart bestimmt, dass unerwünschte Kreisströme in den geschlossenen Strommaschen vermieden oder zumindest reduziert werden. Die Überwachungseinrichtung 18 gibt die Korrektursignale K mindestens einer der Steuereinrichtungen 7 der Umrichter 6 vor. Die Steuereinrichtungen 7 der Umrichter 6 berücksichtigen die Korrektursignale K bei der Ansteuerung der Umrichter 6.

In beiden Fällen sind die Steuereinrichtungen 7 der Umrichter 6 somit in der Lage, die Arme 10 ihrer Umrichter 6 entsprechend anzusteuern. Konkret kann die jeweilige Steuereinrichtung 7 in dem Fall, dass in einem der Arme 10 des von ihr gesteuerten Umrichters 6 eine Abweichung des tatsächlich in dem jeweiligen Arm 10 fließenden Stromes von seinem Sollwert auftritt, durch Änderung der Ansteuerung (mindestens) eines Submoduls 11 des jeweiligen Armes 10 korrigierend eingreifen. Somit ist aufgrund der Art und Weise der Bestimmung der Sollwerte I1* bis I12* und die Überwachung der zugehörigen Istwerte I1 bis I12 auf deren Einhaltung gewährleistet, dass in den geschlossenen Strommaschen keine Kreisströme oder zumindest keine nennenswerten Kreisströme entstehen.

Im Falle der Ausgestaltung der Energieübertragungseinrichtung 1 der FIG 6 und 7 können, wie in den FIG 6 und 7 exemplarisch dargestellt, an das ausgangsseitige Drehstromsystem 3 Primärwicklungen eines Ofentransformators 20 angeschlossen sein. Auch in diesem Fall sind wieder Sekundärwicklungen des Ofentransformators 20 mit Elektroden 22 eines Lichtbogenofens 21 verbunden.

Die vorliegende Erfindung weist viele Vorteile auf. Insbesondere können auf einfache Art und Weise mehrere Umrichter 6 parallel geschaltet werden. Hierbei können die einzelnen Umrichter 6 nach Bedarf ausgebildet sein. Es ist auch möglich, einen oder beide der beiden Umrichter 6 gemäß FIG 6 so auszugestalten, wie dies vorstehend in Verbindung mit FIG 1 erläutert wurde. Auch ist es möglich, nach Bedarf weitere Umrichter 6 parallel zu schalten. Das Prinzip bleibt stets dasselbe. Die Umrichter 6 können weiterhin sowohl bezüglich ihrer elektrischen Konfiguration als auch bezüglich ihrer Dimensionierung voneinander abweichen. Damit ist es möglich, für eine bestimmte Spannungsklasse nur einige wenige standardisierte Umrichter 6 vorzuhalten und dann je nach Leistungsbedarf zu gruppieren. Dies ist prinzipiell zwar auch im Stand der Technik möglich. Im Stand der Technik werden jedoch zur Vermeidung von Kreisströmen teure Transformatoren benötigt.

Insbesondere im Falle der Ausgestaltung gemäß FIG 1 werden in Verbindung mit einem Lichtbogenofen 21 die Drosseln 20 nur noch zur Ankopplung an das eingangsseitige Drehstromsystem 2 benötigt. Hingegen muss keine Unterdrückung von Stromkomponenten zwischen den Umrichtern 6 erfolgen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Energieübertragungseinrichtung
- 2,3: Drehstromsysteme
- 4, 5: Phasen
- 6: Umrichter
- 7: Steuereinrichtungen
- 8: eingangsseitige Umrichter
- 9: ausgangsseitige Umrichter
- 10: Arme
- 11: Submodule
- 12, 20, 23: Drosseln
- 13: Speicherkondensator
- 14: Halbleiterschalter
- 15: Verbindungsleitungen
- 16, 17: Anschlussleitungen
- 18: Überwachungseinrichtung
- 19: Transformator
- 21: Lichtbogenofen
- 22: Elektroden

- I*, i*: Sollwertvektoren
- I: Istwertvektor
- i1* bis i24*: Sollwerte für die Teilströme
- i1 bis i24: Teilströme
- I1 bis 112: Gesamtströme
- I1* bis I12*: Sollwerte für die Gesamtströme
- K: Korrektursignale
- U1, U2: Gleichspannungspotenziale

## Patentansprüche

1. Energieübertragungseinrichtung zum Übertragen elektrischer Energie von einem eingangsseitigen Drehstromsystem (2) mit eingangsseitigen Phasen (4) zu einem ausgangsseitigen Drehstromsystem (3) mit ausgangsseitigen Phasen (5),
- wobei die eingangsseitigen Phasen (4) mit den ausgangsseitigen Phasen (5) über elektrisch parallel zueinander geschaltete Umrichter (6) verbunden sind, so dass sich über mehrere Umrichter (6) hinweg geschlossene Strommaschen bilden,
- wobei die Umrichter (6) als Multilevelkonverter ausgebildet sind, die von einer jeweiligen Steuereinrichtung (7) gesteuert werden,
- wobei die Energieübertragungseinrichtung eine Überwachungseinrichtung (18) aufweist, welche die geschlossenen Strommaschen auf Kreisströme überwacht und den Steuereinrichtungen (7) der Umrichter (6) mindestens ein Korrektursignal (K) vorgibt, das von den Steuereinrichtungen (7) der Umrichter (6) bei der Ansteuerung der Umrichter (6) berücksichtigt wird, wobei das Korrektursignal (K) derart bestimmt ist, dass den Kreisströmen in den geschlossenen Strommaschen entgegengewirkt wird, oder die Steuereinrichtungen (7) der Umrichter (6) die geschlossenen Strommaschen auf Kreisströme überwachen und den Kreisströmen in den geschlossenen Strommaschen durch Ansteuerung der Umrichter (6) entgegenwirken.

2. Energieübertragungseinrichtung nach Anspruch 1,
**dadurch gekennzeichnet,**
- **dass** die Umrichter (6) jeweils einen als Multilevelkonverter ausgebildeten eingangsseitigen Umrichter (8) und einen als Multilevelkonverter ausgebildeten ausgangsseitigen Umrichter (9) aufweisen,
- **dass** die eingangsseitigen Umrichter (8) mit den eingangsseitigen Phasen (4) des eingangsseitigen Drehstromsystems (2) verbunden sind und an jeweiligen Ausgängen ein erstes und ein zweites Gleichspannungspotenzial (U1, U2) bereitstellen,
- **dass** die ausgangsseitigen Umrichter (9) mit den Ausgängen für das erste und das zweite Gleichspannungspotenzial (U1, U2) des jeweils korrespondierenden eingangsseitigen Umrichters (8) und mit den ausgangsseitigen Phasen (5) des ausgangsseitigen Drehstromsystems (3) verbunden sind,
- **dass** die Ausgänge mit dem ersten Gleichspannungspotenzial (U1) miteinander verbunden sind und die Ausgänge mit dem zweiten Gleichspannungspotenzial (U2) miteinander verbunden sind,
- **dass** die geschlossenen Strommaschen eingangsseitige und ausgangsseitige Strommaschen umfassen,
- **dass** die eingangsseitigen Strommaschen zwischen Armen (10) der eingangsseitigen Umrichter (8) gebildet werden, welche mit der gleichen eingangsseitigen Phase (4) des eingangsseitigen Drehstromsystems (2) verbunden sind, und
- **dass** die ausgangsseitigen Strommaschen zwischen Armen (10) der ausgangsseitigen Umrichter (9) gebildet werden, welche mit der gleichen ausgangsseitigen Phase (5) des ausgangsseitigen Drehstromsystems (3) verbunden sind.

3. Energieübertragungseinrichtung nach Anspruch 2,
**dadurch gekennzeichnet,**
**dass** die eingangsseitigen Umrichter (8) pro eingangsseitiger Phase (4) jeweils direkt oder über eine gemeinsame eingangsseitige Drossel (20) mit den eingangsseitigen Phasen (4) verbunden sind oder mit einer gemeinsamen Sekundärwicklung eines eingangsseitigen Transformators verbunden sind, der primärseitig mit den eingangsseitigen Phasen (4) verbunden ist.

4. Energieübertragungseinrichtung nach Anspruch 2 oder 3,
**dadurch gekennzeichnet,**
**dass** die ausgangsseitigen Umrichter (9) pro ausgangsseitiger Phase (5) jeweils direkt oder über eine gemeinsame ausgangsseitige Drossel mit den ausgangsseitigen Phasen (5) verbunden sind.

5. Energieübertragungseinrichtung nach Anspruch 2 oder 3,
**dadurch gekennzeichnet,**
**dass** die ausgangsseitigen Umrichter (9) pro ausgangsseitiger Phase (5) mit einer jeweiligen Primärwicklung eines jeweiligen ausgangsseitigen Transformators oder mit einer gemeinsamen Primärwicklung eines ausgangsseitigen Transformators (19) verbunden sind, der sekundärseitig mit den ausgangsseitigen Phasen (45) verbunden ist.

6. Energieübertragungseinrichtung nach Anspruch 5,
**dadurch gekennzeichnet,**
**dass** die ausgangsseitigen Transformatoren als Ofentransformatoren ausgebildet sind und Sekundärwicklungen der ausgangsseitigen Transformatoren parallel mit Elektroden (22) eines Lichtbogenofens (21) verbunden sind bzw. der ausgangsseitige Transformator (19) als Ofentransformator ausgebildet ist und Sekundärwicklungen des ausgangsseitigen Transformators (19) mit den Elektroden (22) des Lichtbogenofens (21) verbunden sind.

7. Energieübertragungseinrichtung nach Anspruch 1,
**dadurch gekennzeichnet,**
- **dass** die Umrichter (6) pro eingangsseitiger Phase (4) jeweils direkt oder über eine gemeinsame eingangsseitige Drossel (20) mit den eingangsseitigen Phasen (4) des eingangsseitigen Drehstromsystems (2) verbunden sind,
- **dass** die Umrichter (6) zumindest pro ausgangsseitiger Phase (5) jeweils direkt oder über eine gemeinsame ausgangsseitige Drossel (23) mit den ausgangsseitigen Phasen (5) des ausgangsseitigen Drehstromsystems (3) verbunden sind und
- **dass** die geschlossenen Strommaschen zwischen Armen (10) der Umrichter (6) gebildet werden, welche die gleiche eingangsseitige Phase (4) des eingangsseitigen Drehstromsystems (23) mit der gleichen ausgangsseitigen Phase (5) des ausgangsseitigen Drehstromsystem (3) verbinden.

8. Energieübertragungseinrichtung nach Anspruch 7,
**dadurch gekennzeichnet,**
- **dass** die Umrichter (6) jeweils einen als Multilevelkonverter ausgebildeten eingangsseitigen Umrichter (8) und einen als Multilevelkonverter ausgebildeten ausgangsseitigen Umrichter (9) aufweisen,
- **dass** die eingangsseitigen Umrichter (8) mit den eingangsseitigen Phasen (4) des eingangsseitigen Drehstromsystems (2) verbunden sind und an jeweiligen Ausgängen ein erstes und ein zweites Gleichspannungspotenzial (U1, U2) bereitstellen,
- **dass** die ausgangsseitigen Umrichter (9) mit den Ausgängen für das erste und das zweite Gleichspannungspotenzial (U1, U2) des jeweils korrespondierenden eingangsseitigen Umrichters (8) und mit den ausgangsseitigen Phasen (5) des ausgangsseitigen Drehstromsystems (3) verbunden sind und
- **dass** die Ausgänge mit den ersten Gleichspannungspotenzialen (U1) voneinander getrennt sind und die Ausgänge mit dem zweiten Gleichspannungspotenzialen (U2) voneinander getrennt sind.

9. Energieübertragungseinrichtung nach Anspruch 7 oder 8,
**dadurch gekennzeichnet,**
**dass** an das ausgangsseitige Drehstromsystem (3) Primärwicklungen eines Ofentransformators (19) angeschlossen sind und dass Sekundärwicklungen des Ofentransformators mit Elektroden (22) eines Lichtbogenofens (21) verbunden sind.
